# EUROPÄISCHE PATENTSCHRIFT

(11) **EP 2 580 089 B1**
(45) Veröffentlichungstag und Bekanntmachung des Hinweises auf die Patenterteilung: **27.08.2014**
(21) Anmeldenummer: 11729371.2
(22) Anmeldetag: 08.06.2011
(51) Int. Cl.: B60N 2/48

(54) **KOPFSTÜTZE, INSBESONDERE FÜR EIN KRAFTFAHRZEUG**
HEADREST, IN PARTICULAR FOR A MOTOR VEHICLE
APPUI-TÊTE, DESTINÉ NOTAMMENT À UN VÉHICULE AUTOMOBILE

(30) Priorität: 11.06.2010 DE 102010023403
(43) Veröffentlichungstag der Anmeldung: 17.04.2013
(73) Patentinhaber: Johnson Controls GmbH, 51399 Burscheid (DE)
(72) Erfinder: SCHMITZ, Andreas, 51399 Burscheid (DE); VÖLKER, Henrik, 51399 Burscheid (DE)
(74) Vertreter: Schwöbel, Thilo K.
(86) Internationale Anmeldenummer: PCT/EP2011/002805
(87) Internationale Veröffentlichungsnummer: WO 2011/154130

(56) Entgegenhaltungen:
- EP-A1- 1 193 114
- DE-C1- 10 224 060
- GB-A- 2 336 304
- US-A1- 2008 290 713

## Beschreibung

Die Erfindung betrifft eine Kopfstütze, insbesondere für ein Kraftfahrzeug.

Aus der Druckschrift WO 2005/097545 A2 ist eine Kopfstütze für einen Fahrzeugsitz bekannt, bei welcher zumindest ein dem Kopf des Sitzinsassen zugewandtes Teilstück der Kopfstütze unfallbedingt unter der Wirkung einer Antriebseinrichtung aus einer Gebrauchsstellung zum Kopf des Sitzinsassen hin In eine Sicherheitsstellung verlagerbar ist. Ähnliche Kopfstützen sind auch aus den Druckschriften DE 100 47 406 A1, DE 10 2006 046 975 A1 und EP 1 491 394 A1 bekannt.

Ferner ist aus der Druckschrift DE 102 02 598 A1 eine Kopfstütze für einen Fahrzeugsitz bekannt, bei der eine Komforteinstellungsmöglichkeit realisiert ist.

Oftmals ist für die Betätigung der Komfortverstellung bzw. die Veränderung der Komfortverstellungseinrichtung die Betätigung eines Bedienelements, wie beispielsweise eines Druckknopfes oder dergleichen erforderlich, was im Verkehrsgeschehen zu einer geringeren Sicherheit führt und ferner auch eine Komforteinbuße zur Folge hat.

Der Erfindung liegt daher die Aufgabe zugrunde, eine Kopfstütze für einen Fahrzeugsitz mit gegenüber dem Stand der Technik gesteigerter Funktionalität, verbessertem Komfort, erhöhtem Gebrauchswert und weiter erhöhter Sicherheit bei der Benutzung zu schaffen.

Die vorliegende Erfindung ist in Verbindung mit Kopfstützen gemäß der zuvor zitierten WO 2005/097545 A2 anwendbar, auf deren Offenbarungsgehalt hiermit zur Vermeidung von Wiederholungen vollumfänglich Bezug genommen wird. Aus der DE 10 224 060 C1 ist eine Kopfstütze entsprechend dem Oberbegriff des Anspruchs 1 bekannt.

Die Aufgabe wird gelöst durch eine Kopfstütze für einen Fahrzeugsitz, insbesondere für einen Kraftfahrzeugsitz, wobei die Kopfstütze ein dem Kopf eines Sitzinsassen zugewandtes Polsterteil, einen Grundkörper und eine Komfortverstellungseinrichtung aufweist, wobei in einer Benutzungssituation der Kopfstütze mittels der Komfortverstellungseinrichtung das Polsterteil relativ zu dem Grundkörper von einer ersten und weiter vom Kopf des Sitzinsassen entfernten Position in eine zweite und näher am Kopf des Sitzinsassen vorgesehenen Position einstellbar Ist, wobei die Komfortverstellungseinrichtung zwei in einer Verriegelungsstellung und in einer Entriegelungsstellung einstellbare Steuerelemente aufweist, wobei die Bewegung der Steuerelemente synchronisiert ist.

Es ist hierdurch in einfacher Weise möglich, eine einfache und robuste Verstellmöglichkeit dadurch zu realisieren, dass zwei Steuerelemente, beispielsweise beidseitig an der Kopfstütze, angebracht sind und so zu einer größeren Stabilität der Kopfstütze als lediglich beim Vorhandensein eines einzigen Steuerelements führen und dennoch eine problemlos und auch über eine lange Lebensdauer des Produkts hin benutzungsfähige und funktionstüchtige Einstellmöglichkeit der Kopfstütze erzielen.

Erfindungsgemäß ist es besonders bevorzugt, dass die Steuerelemente mittels einer Synchronisationsstange miteinander verbunden sind, so dass auf diese Weise eine einfache und sichere Synchronisation der Steuerelemente möglich ist.

Erfindungsgemäß ist es besonders bevorzugt, wenn die Komfortverstellungseinrichtung zwei in einer Verriegelungsstellung und In einer Entriegelungsstellung einstellbare Steuerelemente aufweist, wobei bei einer Einstellung der Steuerelemente In der Verriegelungsstellung eine direkte Bewegung des Polsterteils von der ersten Position in die zweite Position möglich, eine Bewegung des Polsterteils in die entgegengesetzte Richtung jedoch gesperrt ist und wobei bei einer Einstellung der Steuerelemente In der Entriegelungsstellung eine direkte Bewegung des Polsterteils von der ersten Position in die zweite Position und von der zweiten Position in die erste Position möglich ist

Hierdurch ist erfindungsgemäß mit einfachen Mitteln eine Steuerung der Verriegelung der Positionierung des Polsterteils möglich, ohne dass weitere Bedienelemente betätigt werden müssten.

Erfindungsgemäß ist es besonders bevorzugt, dass das Posterteil mittels der Komfortverstellungseinrichtung auch von der zweiten Position in Richtung zur ersten Position einstellbar ist, wobei dies die Einstellung einer vorderen Extremalposition des Polsterteils erfordert.

Es ist hierdurch in einfacher Weise möglich, durch einfache Verstellung des Polsterteils in die vordere Extremalposition eine Einstellbarkeit des Polsterteils dahingehend zu erreichen, dass nicht nur ausgehend von einer weiter hinten liegenden (ersten) (d.h. vom Kopf des Fahrzeuginsassen weiter entfernten) Einstellung des Polsterteils aus eine weitere vorne liegende (zweite) (d.h. dem Kopf des Fahrzeuginsassen näher liegende) Einstellung des Polsterteils möglich ist, sondern dass auch ausgehend von einer weiter vorne liegenden (zweiten) (d.h. dem Kopf des Fahrzeuginsassen näher liegenden) Einstellung des Polsterteils aus eine weiter hinten liegende (erste) (d.h. vom Kopf des Fahrzeuginsassen weiter entfernte) Einstellung des Polsterteils ohne die Betätigung von Bedienelementen möglich ist, indem lediglich das Polsterteil in eine (vordere) Extremalposition (und gegebenenfalls nachfolgend zusätzlich auch in eine (hintere) weitere Extremalposition) gebracht wird und anschließend in die gewünschte Einstellposition eingestellt wird.

Erfindungsgemäß ist ferner bevorzugt, dass die Bewegung des Polsterteils zur Komfortverstellung eine Verschwenkbewegung des Polsterteils um eine im Wesentlichen horizontal verlaufende Drehachse ist. Hierdurch ist in einfacher Weise eine Einhandbedienung der Verstellung des Polsterteils möglich.

Ferner ist es erfindungsgemäß bevorzugt, wenn die zur Bewegung des Polsterteils in der Richtung von seiner ersten Position in seine zweite Position benötigte Verstellkraft im Bereich der Extremalposition vergrößert vorgesehen ist, bzw. wenn das Polsterteil in eine Mehrzahl von Verrastpositionen einstellbar ist, wobei die zur Verstellung in der Richtung von der ersten Position in die zweite Position des Polsterteils benötigte Verstellkraft nach der letzten Verrastposition vor der Extremalposition vergrößert vorgesehen ist.

Es ist hierdurch erfindungsgemäß in vorteilhafter Weise möglich, dass die letzte Verrastposition bzw. Rastposition des Polsterteils vor der Entriegelung sicher und deutlich seitens des Benutzers erkannt wird. Insbesondere ist es dadurch in einfacher Weise vorteilhaft möglich, die letzte Verrastposition vor der Entriegelung (d.h. vor der Extremalposition des Polsterteils) auch bei einer erstmaligen Bedienung der Komfortverstellung sicher einzustellen. Ein weiterer Vorteil besteht darin, dass der Mechanismus der Komfortverstellung des Polsterteils nicht unbeabsichtigt (bzw. unwillkürlich) entriegelt wird. Insbesondere ergibt sich dadurch ein höheres Maß an Komfort sowie ein größeres Maß an Sicherheit, da hiermit eine weniger große Ablenkungswirkung etwa eines Fahrers eines Fahrzeugs vom Verkehrsgeschehen zu erwarten ist.

Im Folgenden wird eine rein beispielhaft aufzufassende Ausführungsform der Erfindung unter Bezugnahme auf die beigefügte Zeichnung beschrieben.
- **Figur 1**: zeigt schematisch eine Schnittdarstellung durch eine erfindungsgemäße Kopfstütze.
- **Figur 2**: zeigt schematisch zwei Detaildarstellungen einer erfindungsgemäßen Kopfstütze gemäß Figur 1.
- **Figuren 3 bis 6**: zeigen eine erfindungsgemäße Kopfstütze mit zwei Steuerelementen, die miteinander synchronisiert sind.

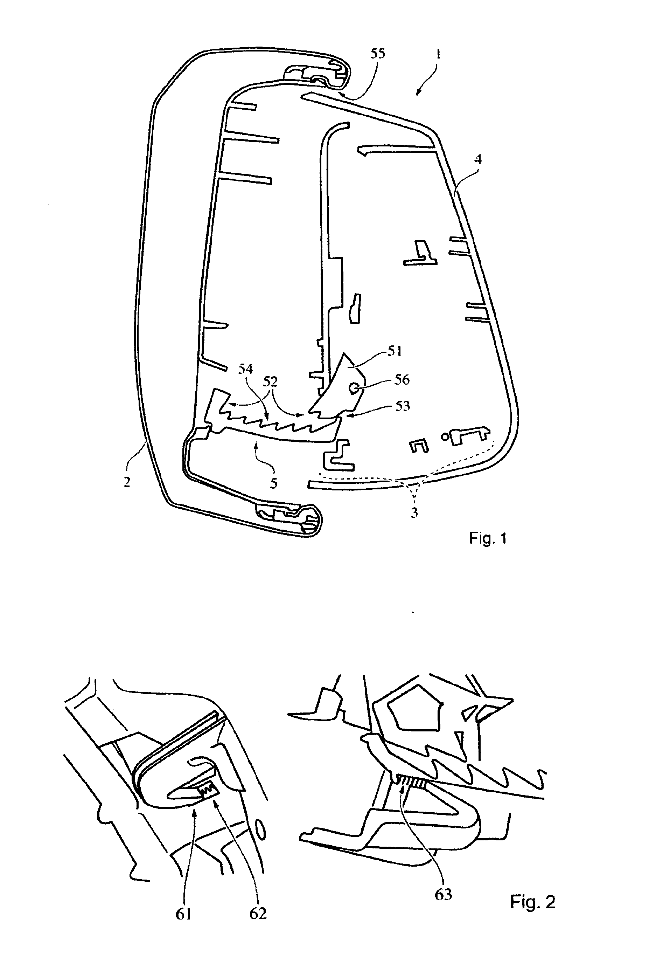

Figur 1 zeigt in einer schematischen Schnittdarstellung eine Kopfstütze 1 mit einem Komfortverstellmechanismus 5 bzw. eine erfindungsgemäß ausgestaltete Kopfstütze 1 für einen Kraftfahrzeugsitz.

Figur 2 zeigt schematisch zwei Detaildarstellungen einer erfindungsgemäßen Kopfstütze 1 und wird im Folgenden gemeinsam mit Figur 1 beschrieben.

Die Kopfstütze 1 weist einen Grundkörper 2 auf, der starr, gegebenenfalls auch höhenverstellbar, über paarige Haltestangen (nicht dargestellt) mit einer (nicht dargestellten) Rückenlehne eines Fahrzeugsitzes verbunden ist. Der Grundkörper 2 ist mit einem Polsterteil 4 verbunden und das Polsterteil 4 ist gegenüber dem Grundkörper 2 nach vorne, auf den Hinterkopf eines Fahrzeuginsassen zu (in der Darstellung gemäß der Figur 1 nach rechts), bzw. nach hinten, vom Hinterkopf des Fahrzeuginsassen weg (in der Darstellung gemäß der Figur 1 nach links), verlagerbar. Das Polsterteil 4 kann eine Sicherheitseinrichtung 3 aufweisen, die eine zusätzliche Verlagerung der Anlagefläche des Polsterteils 4 in Richtung auf den Kopf des Sitzinsassen hin dann durchführt, wenn eine besondere Situation vorliegt, beispielsweise eine Unfallsituation (etwa eine sog. Rückwärtsunfallsituation (engl. rear crash), in der ein zu großer Abstand zwischen der Anlagefläche des Polsterteils 4 und dem Kopf des Sitzinsassen dazu führen kann, dass durch den Aufprall ein sog. Schleudertrauma bewirkt wird, was durch die Sicherheitseinrichtung verhindert werden soll).

Erfindungsgemäß ist es insbesondere vorgesehen, dass die zu Komfortzwecken durchgeführte Verlagerung des Polsterteils 4 relativ zum Grundkörper 2 mittels einer Drehbewegung bzw. einer Schwenkbewegung um eine Drehachse 55 vorgesehen ist. Hierdurch ist eine besonders einfache und intuitive Bedienung der Komforteinstellmöglichkeit der erfindungsgemäßen Kopfstütze 1 möglich. Erfindungsgemäß ist es besonders bevorzugt vorgesehen, dass die Drehachse 55 in etwa horizontal verläuft, im oberen Bereich der Kopfstütze bzw. des Grundkörpers 2.

Innerhalb der Kopfstütze 1 ist zwischen dem Polsterteil 4 und dem Grundkörper 2 eine Komfortverstellungseinrichtung 5 vorgesehen. Mit der Komfortverstellungseinrichtung 5 kann das Polsterteil 4 verlagert werden. Die Komfortverstellungseinrichtung 5 weist hierzu zwei Steuerelemente 51 auf, die in einer Verriegelungsstellung und in einer Entriegelungsstellung einstellbar ist. In der Figur 1 ist das Polsterteil 4 in einer Extremalposition (am weitesten vom Kopf des Sitzinsassen entfernt) dargestellt und es ist eines der Steuerelemente 51 in seiner Entriegelungsstellung eingestellt dargestellt. Die Komfortvestellungseinrichtung 5 weist im dargestellten Beispiel für jedes Steuerelement eine Verrastungsverzahnung 54 auf, die mit dem Steuerelement 51 in Eingriff befindlich ist (nicht in Figur 1 dargestellt), sofern sich das Steuerelement 51 in seiner Verriegelungsstellung befindet, die man sich gegenüber seiner in Figur 1 dargestellten Einstellung um etwa 20° bis 40° (um eine weitere Drehachse 56) nach links gedreht vorzustellen hat.

In der (in Figur 1 dargestellten) Extremalposition des Polsterteils 4 findet eine Verstellung des Steuerelements 51 in seine Entriegelungsstellung durch Berührung (bzw. durch Anschlag gegeneinander) zweier zweiter Anschlagflächen 53 statt. Durch diese Berührung bzw. durch diesen Anschlag bewirken die zweiten Anschlagflächen 53 eine Drehung des Steuerelements 51 nach rechts (um die weitere Drehachse 56), so dass die Entriegelungsstellung des Steuerelements 51 eingestellt ist. In der Entriegelungsstellung des Steuerelements 51 kann das Polsterteil 4 beliebig sowohl in Richtung (in der Regel nach vorne) zum Kopf des Insassen hin als auch in Gegenrichtung, d.h. in der Regel nach hinten, bewegt werden. Bevorzugt kann eine Vorspannung des Polsterteils 4 in die hintere Position vorgesehen sein, etwa mittels einer Vorspannfeder oder einem sonstigen mechanischen oder elektrischen Energiespeicher. Hierdurch wird bevorzugt verhindert, dass sich das Polsterteil in undefinierten Einstellzuständen befindet.

Wird das Polsterteil in eine weitere Extremalposition (ganz hinten) eingestellt, so berühren sich zwei erste Anschlagflächen 52 (bzw. schlagen aneinander an), so dass die Steuerelemente 51 (durch Linksdrehung gemäß der Darstellung in Figur 1 um die weitere Drehachse 56) in seine Verriegelungsposition eingestellt wird. In dieser Verriegelungsposition der Steuerelemente 51 sind die Steuerelemente 51 mit den Verrastungsverzahnungen 54 gegenüber einer Bewegung des Polsterteils 4 nach hinten (d.h. vom Kopf des Benutzers weg) verrastet (d.h. es kann nicht in diese Richtung bewegt werden) und gegenüber einer Bewegung des Polsterteils 4 nach vorne (d.h. zum Kopf des Benutzers hin) nicht verrastet (d.h. das Polsterteil 4 kann in inkrementellen Schritten in verschiedene Einstellpositionen eingestellt werden). Erfindungsgemäß werden insbesondere die Steuerelemente 51 zusammen mit dem Polsterteil 4 bewegt und die Verrastungsverzahnungen 54 sind mit dem Grundkörper 2 verbunden. Alternativ kann es jedoch auch umgekehrt vorgesehen sein.

Erfindungsgemäß ist es bevorzugt, wenn die zur Bewegung des Polsterteils 4 in der Richtung von seiner ersten Position in seine zweite Position benötigte Verstellkraft im Bereich der (vorderen) Extremalposition vergrößert vorgesehen ist. Insbesondere ist bevorzugt vorgesehen, wenn das Polsterteil 4 in eine Mehrzahl von Verrastpositionen einstellbar ist, wobei die zur Verstellung in der Richtung von der ersten Position in die zweite Position des Polsterteils 4 benötigte Verstellkraft nach der letzten (verrastbar einstellbaren) Verrastposition vor der (vorderen) Extremalposition vergrößert vorgesehen Ist. Es Ist hierdurch erfindungsgemäß vorteilhaft möglich, dass die letzte Verrastposition bzw. Rastposition des Polsterteils vor der Entriegelung sicher und deutlich seitens des Benutzers erkannt wird, so dass die vorderste verrastbare Einstellposition auch bei einer erstmaligen Bedienung der Komfortverstellung sicher erreichbar ist. Zur Herbeiführung einer vergrößerten Verstellkraft im Bereich der Extremalposition ist in den Detaildarstellungen gemäß der Figur 2 ein Gegenanschlag 61 und eine Feder 62 (linke Detaildarstellung gemäß Figur 2) bzw. eine Lagerung 63 einer Feder im Endanschlag (rechte Detaildarstellung gemäß Figur 2) dargestellt. Erfindungsgemäß kann generell zur Vergrößerung der Verstellkraft beispielsweise eine Blattfeder und/oder eine Spiralfeder und/oder eine Pufferfunktion vorgesehen sein, wobei die Pufferfunktion insbesondere mittels eines Gummimaterials und/oder mittels eines Schaummaterials und/oder mittels eines Lineardämpferelements und/oder mittels eines Rotationsdämpferelements um die Drehachse 55 vorgesehen sein kann.

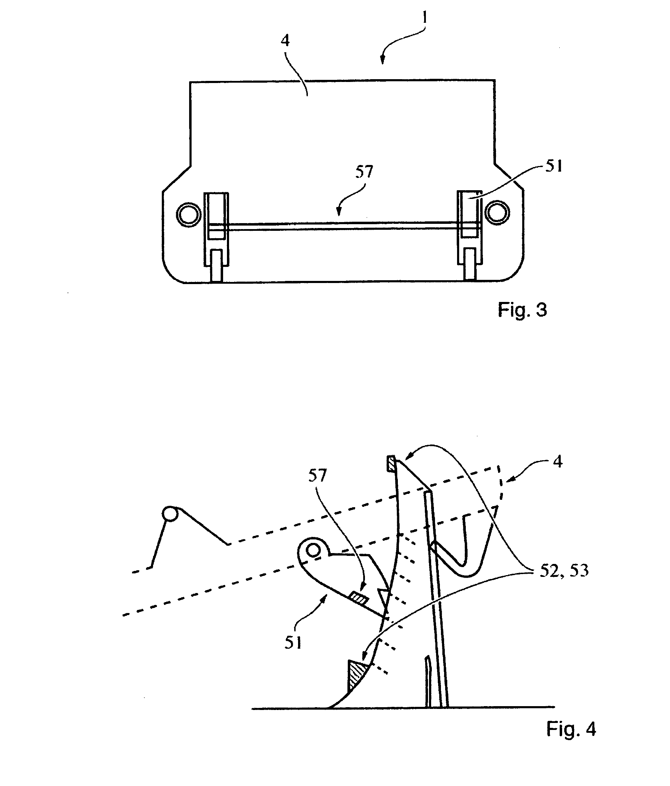

In den Figuren 3 bis 6 ist die erfindungsgemäße Kopfstütze 1 mit zwei Steuerelementen 51 dargestellt, wobei die Steuerelemente 51 miteinander synchronisiert sind. Zur Synchronisierung der beiden Steuerelemente 51 ist es erfindungsgemäß bevorzugt vorgesehen, dass dies über eine Synchronisationsstange 57 geschieht. Jeweils sind die Steuerelemente 51 sowie entsprechende zu jedem Steuerelement 51 jeweils vorgesehene Verrastungsverzahnungen 54 beispielsweise im seitlichen Bereich rechts und links beidseitig an der Kopfstütze 1 vorgesehen. Eine Betätigung der Komfortverstellungseinrichtung 5 der Kopfstütze derart, dass eines der Steuerelemente 51 in seine Verriegelungsstellung oder in seine Entriegelungsstellung bewegt wird, bewirkt, dass aufgrund der Synchronisation zwischen den Steuerelementen 51 auch eine solche Bewegung des anderen Steuerelements 51 in die Verriegelungsstellung bzw. die Entriegelungsstellung bewirkt wird, so dass in besonders vorteilhafter Weise eine besonders komfortable, sichere und angenehme Benutzung der Komfortverstellungseinrichtung 5 der Kopfstütze 1 möglich ist.

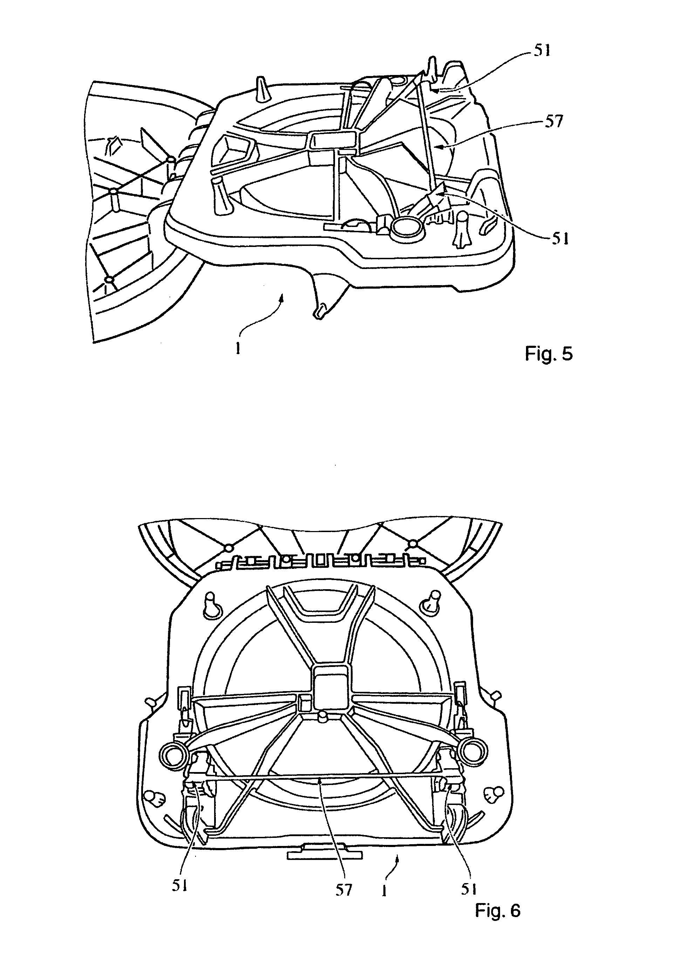

Figur 3 zeigt schematisch einen Teil der Kopfstütze 1, wobei in der Figur 3 das Polsterteil 4 bzw. die Frontplatte, die beiden Steuerelementen 51 und die Synchronisationsstange 57 dargestellt ist. In Figur 4 wird eine Detaildarstellung des Verrastmechanismus zwischen dem Polsterteil bzw. der Frontplatte 4 und dem Grundkörper mittels der Steuerelemente 51 bzw. der Rastelemente, der Verrastungsverzahung 54 und der Synchronisationsstange 57 dargestellt. Die Figuren 5 und 6 stellen perspektivische Darstellungen der Kopfstützenanordnung mit der Synchronisationsstange 57 dar.

### Bezugszeichenliste

- 1: Kopfstütze
- 2: Grundkörper
- 3: Sicherheitseinrichtung
- 4: Polsterteil
- 5: Komfortverstellungs-Einrichtung
- 51: Steuerelement
- 52: erste Anschlagflächen
- 53: zweite Anschlagflächen
- 54: Verrastungsverzahnung
- 55: Drehachse
- 56: weitere Drehachse (des Steuerelements)
- 57: Synchronisationsstange
- 61: Gegenanschlag
- 62: Feder
- 63: Lagerung der Feder im Endanschlag

## Patentansprüche

1. Kopfstütze (1) für einen Fahrzeugsitz wobei die Kopfstütze (1) ein dem Kopf eines Sitzinsassen zugewandtes Polsterteil (4), einen Grundkörper (2) und eine Komfortverstellungseinrichtung (5) umfasst, wobei in einer Benutzungssituation der Kopfstütze (1) mittels der Komfortverstellungseinrichtung (5) das Polsterteil (4) relativ zu dem Grundkörper (2) von einer ersten und weiter vom Kopf des Sitzinsassen entfernten Position in eine zweite und näher am Kopf des Sitzinsassen vorgesehenen Position einstellbar ist, wobei die Bewegung des Polsterteils (4) zur Komfortverstellung eine Verschwenkbewegung des Polsterteils (4) um eine im Wesentlichen horizontal verlaufende Drehachse (55) ist, wobei die Drehachse (55) im oberen Bereich der Kopfstütze (1) angeordnet ist, **dadurch gekennzeichnet, dass** die Komfortverstellungseinrichtung (5) zwei in einer Verriegelungsstellung und in einer Entriegelungsstellung einstellbare Steuerelemente (51) aufweist, wobei die Bewegung der Steuerelemente (51) synchronisiert ist.

2. Kopfstütze (1) nach Anspruch 1, **dadurch gekennzeichnet, dass** die Synchronisierung der Steuerelemente (51) mittels einer Synchronisationsstange (57) vorgesehen ist, das Polsterteil (4) mittels der Komfortverstellungseinrichtung (5) auch von der zweiten Position in Richtung zur ersten Position einstellbar ist, wobei dies die Einstellung einer vorderen Extrermalposition des Polsterteils (4) erfordert, wobei die zur Bewegung des Polsterteils (4) in der Richtung von seiner ersten Position in seine zweite Position benötigte Verstellkraft im Bereich der Extremalposition vergrößert vorgesehen ist.

3. Kopfstütze (1) nach einem der vorhergehenden Ansprüchen, **dadurch gekennzeichnet, dass** bei einer Einstellung der Steuerelemente (51) in der Verriegelungsstellung eine direkte Bewegung des Polsterteils (4) von der ersten Position in die zweite Position möglich, eine Bewegung des Polsterteils (4) in die entgegengesetzte Richtung jedoch gesperrt ist und wobei bei einer Einstellung der Steuerelemente (51) in der Entriegelungsstellung eine direkte Bewegung des Polsterteils (4) von der ersten Position in die zweite Position und von der zweiten Position in die erste Position möglich ist.

## Claims

1. Headrest (1) for a vehicle seat
whereby the headrest (1) comprises a cushion part (4) facing the head of a seat occupant, a base body (2) and a comfort adjustment device (5), whereby in a situation of use of the headrest (1), the cushion part (4) through the use of comfort adjustment device (5) can be switched relative to the base body (2) from a first position further removed from the head of the seat occupant to a second position closer to the head of the seat occupant, wherein the movement of the cushion part (4) for the comfort adjustment of a pivoting movement of the cushion part (4) is arranged in a substantially horizontal extending axis of rotation (55), wherein the axis of rotation (55) in the upper part of the headrest (1), **characterised in that** the comfort adjustment device (5) comprises two adjustable control devices in a locked position and an unlocked position (51), wherein the movement of the control devices (51) is synchronised

2. Headrest (1) according to claim 1, **characterised in that** the synchronisation of the control elements (51) is provided by means of a synchronisation bar (57), the cushion part (4) can be adjusted with the help of the comfort adjustment device (5) also from the second position toward the first position, where this requires the setting of a front extreme position of the cushion part (4), wherein the effort required for the movement of the cushion part (4) in the direction from its first position to its second position is increased in the area of the extreme position.

3. Headrest (1) according to any one of the preceding claims, **characterised in that** an adjustment of the control elements (51) in the locked position as a direct movement of the cushion part (4) from the first position to the second position is possible, a movement of the cushion part (4) in the opposite direction, however, is inhibited, whereby, on setting the control elements (51) in the unlocked position, a direct movement of the cushion part (4) from the first position to the second position and from the second position to the first position is possible.

## Revendications

1. Appuie-tête (1) pour siège de véhicule,
cet appuie-tête (1) comprenant une partie rembourrée (4) tournée vers la tête d'un passager assis, un corps de base (2) et un dispositif de réglage de confort (5), dans lequel, dans une situation d'utilisation, l'appuie-tête (1) est réglable par rapport au corps de base (2) depuis une première position éloignée de la tête du passager assis vers une seconde position prévue plus près de la tête du passager assis au moyen du dispositif de réglage de confort (5), le mouvement de la partie rembourrée (4) pour le réglage de confort étant un mouvement de pivotement de la partie rembourrée (4) autour d'un axe de rotation orienté sensiblement à l'horizontale (55), l'axe de rotation (55) étant disposé dans la partie supérieure de l'appuie-tête (1), **caractérisé en ce que** le dispositif de réglage de confort (5) présente deux éléments de commande (51) réglables en position de déverrouillage, le mouvement des éléments de commande (51) étant synchronisé.

2. Appuie-tête (1) selon la revendication 1, **caractérisé en ce que** la synchronisation des éléments de commande (51) se fait au moyen d'une barre de synchronisation (57), la partie rembourrée (4) est également réglable depuis la seconde position vers la première position au moyen du dispositif de réglage de confort (5), ceci nécessitant le réglage depuis une position antérieure extrême (4), la force de réglage nécessaire au mouvement de la partie rembourrée (4) de sa première position vers sa seconde position étant prévue de manière à être amplifiée au niveau de la position extrême.

3. Appuie-tête (1) selon une des revendications précédentes, **caractérisé en ce que**, lors d'un réglage des éléments de commande (51) en position de verrouillage, un mouvement direct de la partie rembourrée (4) de la première position vers la seconde position est possible mais un mouvement de la partie rembourrée (4) dans le sens opposé est bloqué et, lors d'un réglage des éléments de commande (51) en position de déverrouillage, un mouvement direct de la partie rembourrée (4) de la première position vers la seconde position et de la seconde position vers la première position est possible.
